# EUROPÄISCHE PATENTSCHRIFT

(11) **EP 1 725 797 B1**
(45) Veröffentlichungstag und Bekanntmachung des Hinweises auf die Patenterteilung: **26.03.2008**
(21) Anmeldenummer: 05715541.8
(22) Anmeldetag: 25.02.2005
(51) Int. Cl.: F16K 27/02

(54) **VENTIL**
VALVE
SOUPAPE

(30) Priorität: 15.03.2004 DE 102004012554; 26.04.2004 DE 102004020275
(43) Veröffentlichungstag der Anmeldung: 29.11.2006
(73) Patentinhaber: Brueninghaus Hydromatik GmbH, 89275 Elchingen (DE)
(72) Erfinder: KREBS, Clemens, 72074 Tübingen (DE)
(74) Vertreter: Körfer, Thomas
(86) Internationale Anmeldenummer: PCT/EP2005/001999
(87) Internationale Veröffentlichungsnummer: WO 2005/095832

(56) Entgegenhaltungen:
- DE-A1- 4 025 488
- DE-A1- 10 014 191
- US-A- 5 107 890
- US-A- 5 511 831
- US-A1- 2001 052 361

## Beschreibung

Die Erfindung betrifft ein Ventil, das in eine Aufnahmeausnehmung eines Ventilträgers einsetzbar ist.

Beim Bau von hydraulischen Einrichtungen, z. B. in der Mobilhydraulik, ist es üblich, Ventile zu verwenden, die in eine Aufnahmeausnehmung eines Ventilträgers eingeschraubt werden. Ein solches, als Rückschlagventil ausgeführtes Ventil, ist aus dem Datenblatt "Flutec Rückschlagventile RV5E" (FLUTEC, fluidtechnische Geräte GmbH, Prospekt Nr. 5.175.2/7.95 HYDAC Katalog 01 Rubrik 9) bekannt. Das Ventil weist ein Gehäuse auf, das in einen Ventilträger eingeschraubt werden kann. Das Ventil wird soweit eingeschraubt, bis ein an dem Gehäuse ausgebildeter Bund an dem Ventilträger anliegt. In dem Gehäuse des Ventils ist eine Dichtfläche ausgebildet, die mit einem Schließkörper dichtend zusammenwirkt und damit einen Zulauf von einem Ablauf trennt. Der Schließkörper ist in einer Ausnehmung des Gehäuses angeordnet und mit einer Federkraft beaufschlagt. Die Abdichtung des Ventils gegenüber dem Ventilträger erfolgt über radial wirkende Dichtelemente, die in axialer Richtung beidseitig der radial angeordneten Ablauföffnungen an dem -Gehäuse angeordnet sind.

Bei dem gezeigten Ventil ist es nachteilig, dass das Gehäuse des Ventils aus lediglich einem Bauteil besteht. Durch die fest vorgegebene Länge dieses einen Bauteils sind radial dichtende Elemente erforderlich, um das Risiko von Undichtigkeiten auf Grund von Herstellungstoleranzen in der axialen Ausdehnung der Aufnahmeausnehmung zu verhindern.
US 2001/0052 361 offenbart ein Ventil gemäß dem Oberbegriff des Anspruchs 1. Der Erfindung liegt die Aufgabe zu Grunde, ein Ventil zu schaffen, das in eine Aufnahmeausnehmung eines Ventilträgers einsetzbar ist, wobei sich die Baulänge des Ventils automatisch an die jeweilige Montagelänge der Aufnahmeausnehmung anpaßt.

Die Aufgabe wird durch das erfindungsgemäße Ventil mit den Merkmalen des Anspruchs 1 gelöst.

Das erfindungsgemäße Ventil weist ein Gehäuse auf, welches sich aus einem ersten Gehäuseteil und einem damit verbindbaren zweiten Gehäuseteil zusammensetzt. Das zweite Gehäuseteil ist hierzu mit einem ersten Ende mit dem ersten Gehäuseteil verbindbar. Das erste Gehäuseteil fixiert das Ventil in eingebautem Zustand in einer Aufnahmeausnehmung eines Ventilträgers.

An dem zweiten Gehäuseteil ist an seinem ersten Ende eine Dichtfläche ausgebildet, die mit einem Schließkörper zu einem Dichtsitz zusammenwirkt. Durch Verbinden des ersten mit dem zweiten Gehäuseteil über das erste Ende des zweiten Gehäuseteils ist die Baulänge des Ventils einstellbar. Damit können Längenunterschiede der Aufnahmeausnehmung, die bei der Herstellung unvermeidbar sind, ausgeglichen werden. Dies ermöglicht eine Abdichtung zwischen dem zweiten Gehäuseteil des Ventils und dem Ventilträger in axialer Richtung.

Die verbindung zwischen dem ersten Gehäuseteil und dem zweiten Gehäuseteil wird durch eine Pressverbindung erzeugt. Damit kann die exakte Länge unmittelbar durch das Einsetzen in die Aufnahmeausnehmung eingestellt werden. Beim Fixieren des ersten Gehäuseteils in der Aufnahmeausnehmung wird dann automatisch das zweite Gehäuseteil in das erste Gehäuseteil ein- bzw. auf das erste Gehäuseteil aufgepresst. Das zweite Gehäuseteil liegt hierzu an einer korrespondierenden Fläche der Aufnahmeausnehmung des Ventilträgers an. Damit wird gleichzeitig zwischen dem zweiten Gehäuseteil und dem Ventilträger eine Abdichtung erreicht.

An dem ersten Gehäuseteil ist eine Auflagefläche ausgebildet, die ein axiales Dichtelement aufnimmt. Erfolgt die Fixierung des ersten Gehäuseteils in dem Ventilträger beispielsweise durch eine Schraubverbindung, so ist das gesamte, vormontierte Ventil einfach in die Aufnahmeausnehmung einzusetzen und soweit einzuschrauben, bis die Auflagefläche an dem Ventilträger anliegt. Dabei wird gleichzeitig das zweite Gehäuseteil in das erste Gehäuseteil ein- bzw. auf das erste Gehäuseteil aufgepresst.

Die in den Unteransprüchen aufgeführten Maßnahmen betreffen vorteilhafte weiterbildungen des erfindungsgemäßen Ventils. Gemäß einer bevorzugten Ausführungsform wird die Pressverbindung durch zwei axial versetzt zueinander ausgebildete Bereiche als erste Presspassung und zweite Presspassung ausgeführt, die jeweils unterschiedliche radiale Ausdehnungen aufweisen. Durch eine solche abgestufte Presspassung wird das Einsetzen des zweiten Gehäuseteils in das erste Gehäuseteil erleichtert. Besonders bevorzugt ist dabei ein jeweils an dem ersten Gehäuseteil und dem zweiten Gehäuseteil angeordneter konischer Übergang zwischen den Bereichen der ersten und der zweiten Presspassung ausgebildet, der die Vormontage des Ventils vereinfacht. An Stelle des Einsetzens in das erste Gehäuseteil kann selbstverständlich auch das zweite Gehäuseteil auf das erste Gehäuseteil aufgepresst werden. Der kürzeren Darstellung wegen wird nachfolgend lediglich die Variante mit einem in das erste Gehäuseteil eingepressten zweiten Gehäuseteil beschrieben.

Die Presspassungen können entweder so ausgeführt sein, dass sich über die maximal verfügbare Einpresstiefe eine konstante Presskraft ergibt oder aber so, dass sich mit zunehmender Einpresstiefe die Presskraft erhöht. Hierzu wird einer der Bereiche an dem ersten Gehäuseteil oder dem zweiten Gehäuseteil konisch ausgeführt. Die damit beim Einsetzen des Ventils erzwungene plastische Verformung des jeweils anderen Gehäuseteils verbessert die Verbindung zwischen dem ersten Gehäuseteil und dem zweiten Gehäuseteil und ist daher besonders im Hinblick auf die Langlebigkeit der Verbindung vorteilhaft. Zudem läßt sich so die Dichtwirkung zwischen dem zweiten Gehäuseteil und dem Ventilträger verbessern.

Zum Kontrollieren der Einpresstiefe ist vorzugsweise an dem zweiten Gehäuseteil eine Markierung ausgebildet, mit deren Hilfe die relative Position des zweiten Gehäuseteils zu dem ersten Gehäuseteil in axialer Richtung kontrolliert werden kann. Als Markierung kann auch eine Anschlagfläche entweder an dem ersten oder an dem zweit-en Gehäuseteil ausgebildet sein, mit der gleichzeitig eine maximale Einpresstiefe bestimmt wird. Eine über diese maximale Einpresstiefe hinausgehende Verkürzung der Baulänge des Ventils erfolgt dann über eine zusätzliche plastische Verformung.

Das zweite Gehäuseteil weist vorzugsweise eine es durchdringende axiale Zulauföffnung auf, so dass das zweite Gehäuseteil als eine einfache, vorzugsweise etwa zylindrische, Hülse herstellbar ist. Während diese Hülse insbesondere wegen der damit zu erreichenden Abdichtung gegenüber dem Ventilträger aus einem hochwertigen Material beispielsweise gedreht wird, kann das erste Gehäuseteil auch aus einem einfachen Material hergestellt sein.

Das erfindungsgemäße Ventil ist in der Zeichnung vereinfacht dargestellt und wird in der nachfolgenden Beschreibung näher erläutert. Es zeigen:
- Fig. 1: ein erstes Ausführungsbeispiel eines vormontierten erfindungsgemäßen Ventils;
- Fig. 2: eine schematische Darstellung einer zur Aufnahme des erfindungsgemäßen Ventils vorgesehenen Aufnahmeausnehmung;
- Fig. 3: ein erfindungsgemäßes Ventil gemäß dem ersten Ausführungsbeispiel in eingebautem Zustand;
- Fig. 4: ein erstes Beispiel für eine Verbindung zwischen dem ersten und dem zweiten Gehäuseteil;
- Fig. 5: ein zweites Beispiel für eine Verbindung zwischen dem ersten und dem zweiten Gehäuseteil;
- Fig. 6: ein zweites Ausführungsbeispiel eines vormontierten erfindungsgemäßen Ventils;
- Fig. 7: eine schematische Darstellung einer zur Aufnahme des erfindungsgemäßen Ventils vorgesehenen Aufnahmeausnehmung;
- Fig. 8: ein erfindungsgemäßes Ventil gemäß dem zweiten Ausführungsbeispiel in eingebautem Zustand;
- Fig. 9: ein erfindungsgemäßes Ventil gemäß dem zweiten Ausführungsbeispiel eingesetzt in eine modifizierte Aufnahmeausnehmung;
- Fig. 10: ein drittes Ausführungsbeispiel eines erfindungsgemäßen Ventils in eingebautem Zustand und
- Fig. 11: ein viertes Ausführungsbeispiel eines erfindungsgemäßen Ventils in eingebautem Zustand.

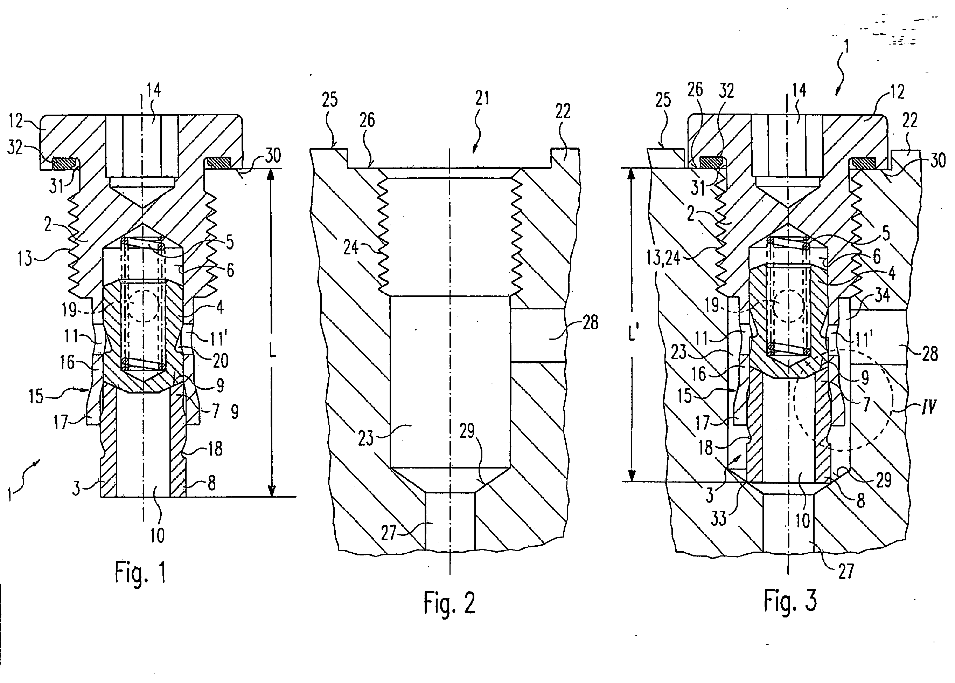

In Fig. 1 ist ein erstes Ausführungsbeispiel eines erfindungsgemäßen Ventils 1 gezeigt, wobei das erfindungsgemäße Ventil 1 vormontiert ist. Ein solchermaßen vormontiertes Ventil 1 ist zum anschließenden Einsetzen in eine Aufnahmeausnehmung vorgesehen. Das Ventil 1 umfasst ein Ventilgehäuse, das aus einem ersten Gehäuseteil 2 und einem zweiten Gehäuseteil 3 zusammengesetzt ist. Die Verbindung zwischen dem ersten Gehäuseteil 2 und dem zweiten Gehäuseteil 3 ermöglicht eine Bestimmung einer resultierenden Baulänge L, indem sie eine Veränderung der relativen axialen Position des zweiten Gehäuseteils 3 zu dem ersten Gehäuseteil 2 ermöglicht.

Im Inneren des Gehäuses des Ventils 1 ist ein Schließkörper 4, der mit einer Druckfeder 5 belastet ist, in einer zentralen Ausnehmung 6 angeordnet. Bei dem dargestellten Ausführungsbeispiel ist die zentrale Ausnehmung 6 in dem ersten Gehäuseteil 2 angeordnet. Das zweite Gehäuseteil 3 weist ein erstes Ende 7 auf, das ein Stück weit in die zentrale Ausnehmung 6 einsetzbar ist. Die Fixierung des ersten Endes 7 des zweiten Gehäuseteils 3 erfolgt über eine Pressverbindung zwischen dem ersten und dem zweiten Gehäuseteil 2, 3. An der Stirnseite des ersten Endes 7 des zweiten Gehäuseteils 3 ist eine Dichtfläche 9 ausgebildet. In dem dargestellten Ausführungsbeispiel ist das Ventil 1 als Rückschlagventil ausgeführt. Der Schließkörper 4 ist topfförmig gestaltet und wird durch die Druckfeder 5 in Schließstellung gebracht. In der Schließstellung wird der Schließkörper 4 in dichtender Anlage an der Dichtfläche 9 des zweiten Gehäuseteils 3 gehalten.

Durch den Boden des topfförmigen Schließkörpers 4 wird eine in axialer Richtung das zweite Gehäuseteil 3 durchdringende Zulauföffnung 10 verschlossen und somit eine Verbindung zu Ablauföffnungen 11, 11' unterbrochen. Wird dem Ventil 1 durch die Zulauföffnung 10 z. B. eine Hydraulikflüssigkeit zugeführt, so wirkt der Druck dieser Flüssigkeit auf den Boden des topfförmigen Schließkörpers 4. Die so an dem Schließkörper 4 angreifende hydraulische Kraft wirkt entgegen der Kraft der Druckfeder 5, so dass bei Überschreiten der Federkraft der Schließkörper 4 weiter in die zentrale Ausnehmung 6 hinein verschoben wird und damit von der Dichtfläche 9 abhebt.

Die Ablauföffnungen 11, 11' werden nunmehr von dem Schließkörper nicht mehr verdeckt und mit der Zulauföffnung 10 verbunden. Damit werden auch die in der Fig. 1 nicht dargestellten, mit den Ablauföffnungen 11, 11' bzw. der Zulauföffnung 10 verbundenen Leitungen oder Kanäle miteinander verbunden. Bei nachlassendem Druck in der Zulauföffnung 10 übersteigt die Kraft der Druckfeder 5 die entgegengesetzt gerichtete hydraulische Kraft, womit der Schließkörper 4 mit seinem Boden wieder in Anlage mit der Dichtfläche 9 an der Stirnseite des ersten Endes 7 des zweiten Gehäuseteils 3 gebracht wird. Um eine Beschädigung des Schließkörpers 4 durch das wiederholte Abheben und Wiederaufsetzen auf der Dichtfläche 9 zu verhindern, kann die Dichtfläche 9 durch Abschrägen der Stirnfläche des ersten Endes 7 des zweiten Gehäuseteils 3 vergrößert werden, wodurch eine automatische Zentrierung des Schließkörpers 4 beim Aufsetzen bewirkt wird.

Während das erste Ende 7 des zweiten Gehäuseteils 3 zur Verbindung mit dem ersten Gehäuseteil 2 ein Stück weit in die zentrale Ausnehmung 6 des ersten Gehäuseteils 2 eingepresst ist, ragt das abgewandte zweite Ende 8 des zweiten Gehäuseteils 3 aus dem ersten Gehäuseteil 2 heraus. Die gesamte Baulänge L des Ventils 1 wird durch die Länge der beiden Gehäuseteile 2 und 3 und die Einpresstiefe des zweiten Gehäuseteils 3 in das erste Gehäuseteil 2 bestimmt.

Das erste Gehäuseteil 2 weist drei axial aufeinander folgende Abschnitte auf. In dem dargestellten Ausführungsbeispiel der Fig. 1 ist zunächst ein Schraubenkopf 12 vorgesehen, an den sich ein Gewindeabschnitt 13 anschließt. Mittels des in diesem Bereich ausgebildeten Außengewindes wird das vormontierte Ventil 1 in der zur Aufnahme vorgesehenen Aufnahmeausnehmung fixiert. Zum Einschrauben des Ventils 1 in die Aufnahmeausnehmung ist in dem dargestellten Ausführungsbeispiel in den Schraubenkopf 12 ein Innensechskant 14 eingebracht. An Stelle des Schraubenkopfs 12 mit dem Innensechskant 14 ist auch jede andere übliche Befestigung denkbar. Beispielhaft zu nennen ist hier das Verwenden eines Schraubenkopfs 12 mit einem Sechskant. Ebenso ist es denkbar, das Ventil 1 lediglich in die Aufnahmeausnehmung einzusetzen und dort über beispielsweise einen Spannbügel zu fixieren.

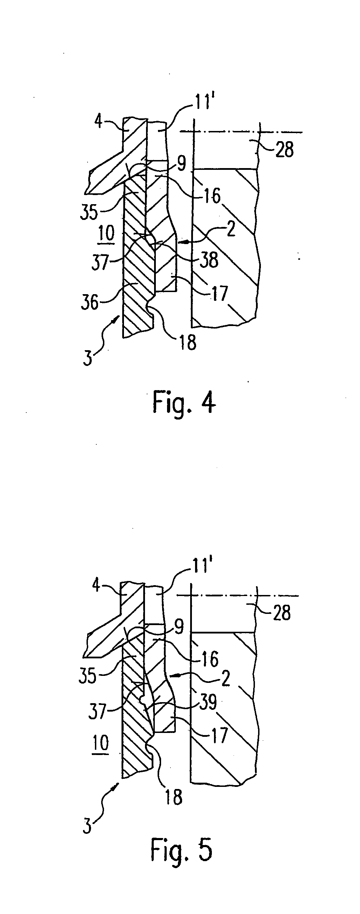

In Richtung des zweiten Gehäuseteils 3 schließt sich an den Gewindeabschnitt 13 ein hülsenförmiger Abschnitt 15 an. In diesem hülsenförmigen Abschnitt 15 sind in Richtung auf das offene Ende der zentralen Ausnehmung 6 des ersten Gehäuseteils 2 hin zunächst die Ablauföffnungen 11, 11' angeordnet. Die Ablauföffnungen 11, 11' durchdringen den hülsenförmigen Abschnitt 15 in radialer Richtung. Weiter in Richtung des offenen Endes sind ein erster Bereich 16 und ein zweiter Bereich 17 angeordnet. Der erste Bereich 16 und der zweite Bereich 17 wirken mit korrespondierenden Bereichen des zweiten Gehäuseteils 3 zu einer Pressverbindung zusammen. Die Pressverbindung sowie die hierzu an dem ersten Gehäuseteil 2 und dem zweiten Gehäuseteils 3 ausgebildeten Geometrien werden nachfolgend noch unter Bezug auf die Fig. 4 und 5 erläutert.

An dem zweiten Gehäuseteil 3 ist an dem äußeren Umfang eine Markierung 18 angebracht, mittels der die Einpresstiefe des zweiten Gehäuseteils 3 in das erste Gehäuseteil 2 kontrolliert werden kann. In dem dargestellten Ausführungsbeispiel der Fig. 1 ist diese Markierung 18 als umlaufende Nut an dem zweiten Gehäuseteil 3 ausgebildet. An Stelle einer umlaufende Nut, die vorzugsweise bei einer ohnehin erforderlichen Drehbearbeitung des zweiten Gehäuseteils 3 eingebracht wird, kann jedoch auch eine andere Form der Markierung z.B. eingeritzt oder mit einem Laser aufgebracht werden.

Zur Verbesserung des Öffnungsverhaltens ist in dem ersten Gehäuseteil 2 eine weitere radiale Öffnung 19 ausgebildet, welche bezüglich der Ablauföffnungen 11, 11' in axialer Richtung zu dem Schraubenkopf 12 hin versetzt in den hülsenförmigen Abschnitt 15 eingebracht ist. Durch diese weitere radiale Öffnung 19 findet bereits während des Öffnens des Ventils 1 ein Druckausgleich zwischen dem Raum, in dem der Schließkörper 4, angeordnet ist, und dem den hülsenförmigen Abschnitt 15 umgebenden Bereich statt. Der Schließkörper 4 ist mit einem Laufspiel in der zentralen Ausnehmung 6 angeordnet. Der so zwischen dem Schließkörper 4 und der Wand der zentralen Ausnehmung 6 ausgebildete Spalt wird beim Öffnen von dem aus der zentralen Ausnehmung 6 verdrängten Druckmittel durchströmt. Das Druckmittel kann dabei aus der weiteren radialen Ausnehmung 19 in das den hülsenförmigen Abschnitt 15 umgebende Volumen entweichen.

Um das Öffnungsverhalten noch weiter zu verbessern, ist in den zylindrischen Bereich des topfförmigen Schließkörpers 4 zudem eine umlaufende Nut 20 eingebracht. Wie nachfolgend noch bei der Erläuterung der Fig. 3 erläutert wird, wird durch diese umlaufende .Nut 20 die beim Öffnen verdrängte Flüssigkeit abgeleitet.

In Fig. 2 ist zur Darstellung einer Aufnahmeausnehmung 21 ein Schnitt durch einen Ventilträger 22 gezeigt. Die Aufnahmeausnehmung 21 ist zur Aufnahme des in der Fig. 1 dargestellten Ventils 1 vorgesehen. Die Aufnahmeausnehmung 21 besteht im wesentlichen aus einem Sackloch 23. In dem zu einer Oberfläche 25 des Ventilträgers 22 hin gerichteten Bereich ist in das Sackloch 23 ein Gewinde 24 eingebracht. Das vormontierte Ventil 1 der Fig. 1 wird in die Aufnahmeausnehmung 21 eingesetzt und der Gewindeabschnitt 13 des ersten Gehäuseteils 2 mit dem Gewinde 24 des Sacklochs 23 verschraubt. An der Oberfläche 25 des Ventilträgers 22 ist ein Absatz 26 ausgebildet, so dass um die Aufnahmeausnehmung 21 herum eine ebene Fläche ausgebildet ist, die als Anlagefläche für eine axiale Dichtung geeignet ist. Die radiale Ausdehnung des Absatzes 26 ist so bemessen, dass der Schraubenkopf 12 des Ventils 1 darin versenkt werden kann. In Abhängigkeit von der Tiefe des Absatzes 25 wird dabei der Schraubenkopf 12 teilweise oder ganz in dem Absatz 26 versenkt.

In das Sackloch 23 mündet ein Zulaufkanal 27 aus, durch den das Druckmittel dem Ventil 1 zugeführt wird, wenn das Ventil 1 als Rückschlagventil ausgeführt ist. In dem dargestellten Ausführungsbeispiel ist eine bevorzugte Anordnung des Zulaufkanals 27 dargestellt, in der die Mittelachse des Zulaufkanals 27 mit der Mittelachse des Sacklochs 23 zusammenfällt. Weiterhin ist in dem Ventilträger 22 zumindest ein Ablaufkanal 28 ausgebildet, der seitlich in das Sackloch 23 ausmündet. In dem dargestellten Ausführungsbeispiel stehen die Mittelachse des Ablaufkanals 28 und die Mittelachse des Sacklochs 23 senkrecht aufeinander.

Zwischen der das Sackloch 23 radial umgebenden Wand des Ventilträgers 22 und dem mit dem Grund des Sacklochs 23 verbundenen Zulaufkanal 27 ist ein Übergang 29 ausgebildet. Der Übergang 29 weist eine sich in Richtung des Zulaufkanals 27 radial verjüngende Form auf, wobei diese Form vorzugsweise konisch ist und beim Bohren des Sacklochs 23 erzeugt wird. Die Oberflächengüte des Übergangs 29 muss ausreichend hoch gewählt werden, so dass durch Anlage des zweiten Endes 8 des zweiten Gehäuseteils 3 eine dichtende Wirkung erzielt wird. Hierzu ist vorzugsweise das Material, aus dem das zweite Gehäuseteil 3 gefertigt wird, von höherer Qualität, als das Material des Ventilträgers 22. Ebenso wie der Ventilträger 22 kann auch das Material des ersten Gehäuseteils 2 von einfacherer Qualität sein.

In Fig. 3 ist das Ventil 1 in eingebautem Zustand dargestellt. Wie es bereits bei den Ausführungen zu Fig. 2 erläutert wurde, wird das vormontierte Ventil 1 in die Aufnahmeausnehmung 21 eingesetzt und mit dem Gewindeabschnitt 13 durch Einschrauben in das Gewinde 24 dort fixiert. Die Baulänge L des vormontierten Ventils 1 ist länger als die Tiefe des Sacklochs 23 zwischen dem Absatz 26 und dem Übergang 29 an der Stelle, an der das zweite Ende 8 des zweiten Gehäuseteils 3 aufsitzt. Das zweite Ende 8 des zweiten Gehäuseteils 3 sitzt damit auf dem Übergang 29 bereits auf, bevor eine Auflagefläche 30 an dem Absatz 26 anliegt. Die in Richtung des offenen Endes des ersten Gehäuseteils 2 orientierte Auflagefläche 30 weist eine weitere umlaufende Nut 31 auf, in die ein Dichtmittel, vorzugsweise ein O-Ring 32 eingelegt ist. Dieser O-Ring 32 wirkt mit dem Absatz 26 dichtend zusammen, wenn die Auflagefläche 30 in Anlage mit dem Absatz 26 ist.

Um den O-Ring 32 mit dem Absatz 26 in Anlage zu bringen, muss zunächst das zweite Gehäuseteil 3 in das erste Gehäuseteil 2 eingepresst werden, um damit die Baulänge L des vormontierten Ventils 1 auf eine Montagelänge L' zu verkürzen. Die erforderliche Presskraft wird unmittelbar beim Einschrauben erzeugt, indem sich das zweite Ende 8 des zweiten Gehäuseteils 3 an dem Übergang 29 abstützt. An dem zweiten Ende 8 des zweiten Gehäuseteils 3 ist an dem äußeren Umfang eine Dichtkante 33 ausgebildet.

Durch das Einpressen des zweiten Gehäuseteils 3 in das erste Gehäuseteil 2 wird nicht nur die ursprüngliche Baulänge L auf die Montagelänge L' verkürzt, sondern gleichzeitig eine erhebliche Flächenpressung zwischen der Dichtkante 33 und dem Übergang 29 erzeugt. Auf Grund des gegenüber dem Außendurchmesser des hülsenförmigen Abschnitts 15 des ersten Gehäuseteils 2 größeren Durchmessers des Sacklochs 23 ist um den hülsenförmigen Abschnitt 15 des ersten Gehäuseteils 2 und den aus diesem hülsenförmigen Abschnitt 15 herausragenden Teil des zweiten Gehäuseteils 3 ein Volumen 34 ausgebildet. Eine Verbindung zwischen dem Volumen 34 und dem Zulaufkanal 27 ist nach der Montage des Ventils 1, bei der zwischen der Dichtkante 33 und dem Übergang 29 eine Dichtwirkung erzeugt wird, lediglich bei geöffneten Ventil 1 möglich. Die Dichtwirkung wird in einfacher Weise erreicht, indem das vormontierte Ventil 1 so weit in die Aufnahmeausnehmung 21 eingeschraubt wird, bis die Auflagefläche 30 an dem Absatz 26 des Ventilträgers 22 anliegt, wobei gleichzeitig das Ventil 1 auf die Montagelänge L' verkürzt wird.

Durch das automatische Einstellen der Montagelänge L' können größere Toleranzen hinsichtlich der Baulänge der einzelnen Komponenten des Ventils 1 ausgeglichen werden. Die Montagelänge L' wird durch den Abstand zwischen dem Absatz 26 des Ventilträgers 22 und dem Auftreffpunkt des zweiten Endes 8 des zweiten Gehäuseteils 3 beim Einsetzen des Ventils 1 in die Aufnahmeausnehmung 21 bestimmt. Diese Montagelänge L' muss kleiner sein als die Baulänge L des vormontierten Ventils 1. Die minimale Montagelänge L' ergibt sich aus der Baulänge L abzüglich der maximalen Einpresstiefe des zweiten Gehäuseteils 3 in das erste Gehäuseteil 2. Damit sind erhebliche Fertigungstoleranzen zulässig, ohne dass die dichtende Wirkung sowohl hinsichtlich des zweiten Gehäuseteils 3 an dem Übergang 29 als auch des O-Rings 32 zum Abdichten des ersten Gehäuseteils 2 an dem Absatz 26 beeinträchtigt wird.

An Stelle der in dem dargestellten Ausführungsbeispiel gezeigten Anordnung eines O-Rings 32 in einer weiteren umlaufenden Nut 31 an dem Schraubenkopf 12 kann auch auf das Ausbilden einer solchen Nut 31 verzichtet werden und beispielsweise zwischen der Auflagefläche 30 und dem Absatz 26 eine flache Dichtscheibe eingelegt werden.

Durch das Einpressen des zweiten Gehäuseteils 3 in das erste Gehäuseteil 2 wird die Druckfeder 5 vorgespannt, indem der in drucklosem Zustand an der Dichtfläche 9 des zweiten Gehäuseteils 3 anliegende Schließkörper 4 weiter in die zentrale Ausnehmung 6 zurückgeschoben wird. Die umlaufende Nut 20, die an dem Schließkörper 4 an dessen äußeren Umfang ausgebildet ist, gelangt dadurch in eine Überdeckung mit der weiteren Öffnung 19, womit sich das Öffnungsverhalten des Ventils 1 positiv beeinflussen lässt.

Zur Dämpfung des Ventils 1 beim Öffnen kann das in der zentralen Ausnehmung 6 eingeschlossene Druckmittel über einen zwischen dem Schließkörper 4 und der zentralen Ausnehmung 6 ausgebildeten Spalt entweichen. Beim Öffnen bewegt sich der Schließkörper 4 in Richtung des geschlossenen Endes der zentralen Ausnehmung 6 und verringert damit ein dort hinter dem Schließkörper 4 in der zentralen Ausnehmung 6 ausgebildetes rückwärtiges Volumen 6'.

Dabei wird entlang des Spalts zwischen dem Schließkörper 4 und der zentralen Ausnehmung 6 das Druckmittel entsprechend der Verringerung des rückwärtigen Volumens 6' verdrängt. Das Druckmittel gelangt bis in die umlaufende Nut 20 und fließt über die weitere radiale Öffnung 19 in das Volumen 34 ab. Der Spalt zwischen dem Schließkörper 4 und der zentralen Ausnehmung 6 wird dabei so bemessen, dass sich eine gewünschte Dämpfung des Ventils 1 ergibt, die mit zunehmendem Laufspiel des Schließkörpers 4 abnimmt.

Damit wird das Öffnungsverhalten wesentlich durch die verwendete Druckfeder 5 und den an der Stirnfläche des topfförmigen Schließkörpers 4 wirkenden, über den Zulaufkanal 27 zugeführten Druck bestimmt.

Durch die Abdichtung des Ventils 1 mit einer axialen Dichtung im Bereich des Schraubenkopfs 12 sowie durch die Dichtwirkung zwischen der an dem zweiten Ende 8 des zweiten Gehäuseteils 3 ausgebildeten Dichtkante 33 und dem Übergang 29 kann auf die sonst üblichen radialen Dichtelemente verzichtet werden. Neben einer Verringerung der Anforderung an die Bauteilepräzision ergibt sich auch eine Verringerung der radialen Abmessungen des Ventils 1. Es kann zudem auch für unterschiedliche vorgesehene Montagelängen L' jeweils das gleiche erste Gehäuseteil 2 verwendet werden. Die Anpassung an unterschiedliche Montagelängen L' erfolgt lediglich durch eine entsprechende Länge des zweiten Gehäuseteils 3, welches auf Grund seiner einfachen Geometrie preiswert zu fertigen ist.

In der Fig. 4 ist ein erstes Beispiel für eine Pressverbindung zwischen dem ersten Gehäuseteil 2 und dem zweiten Gehäuseteil 3 im Ausschnitt IV der Fig. 3 gezeigt. Wie es bereits bei der Beschreibung der Fig. 1 erläutert wurde, ist an dem hülsenförmigen Abschnitt 15 des ersten Gehäuseteils 2 benachbart zu den Ablauföffnungen 11, 11' ein erster Bereich 16 ausgebildet. Dieser erste Bereich 16 weist einen Innendurchmesser auf, der gemeinsam mit einem entsprechenden Außendurchmesser eines an dem ersten Ende 7 des zweiten Gehäuseteils 3 ausgebildeten ersten Bereichs 35 zu einer ersten Presspassung zusammenwirkt.

An dem offenen Ende des ersten Gehäuseteils 2 ist der zweite Bereich 17 ausgebildet, wobei der Innendurchmesser des zweiten Bereichs 17 des ersten Gehäuseteils 2 größer ist als der Innendurchmesser des ersten Bereichs 16 des ersten Gehäuseteils 2. Der zweite Bereich 17 des ersten Gehäuseteils 2 wirkt mit einem zweiten Bereich 36 des zweiten Gehäuseteils 3 zu einer zweiten Presspassung zusammen. Hierzu ist entsprechend der Außendurchmesser des zweiten Gehäuseteils 3 in dem zweiten Bereich 36 des zweiten Gehäuseteils 3 größer als der Außendurchmesser in dem ersten Bereich 35 des zweiten Gehäuseteils 3. Durch die beiden unterschiedlichen Durchmesser der ersten Presspassung und der zweiten Presspassung in den ersten Bereichen 16, 35 des ersten bzw. zweiten Gehäuseteils 2, 3 und den zweiten Bereichen 17, 36 des ersten bzw. zweiten Gehäuseteils 2, 3 wird die Vormontage erleichtert. Hierzu ist jeweils der Übergang zwischen dem ersten Bereich 16, 35 und dem zweiten Bereich 17, 36 als erster konischer Übergang 37 bzw. als zweiter konischer Übergang 38 ausgeführt. Die konischen Übergänge 37 und 38 verhindern ein Verkanten beim Einsetzen des zweiten Gehäuseteils 3 in das erste Gehäuseteil 2.

Die axiale Erstreckung des ersten Bereichs 35 des zweiten Gehäuseteils 3 und die axiale Erstreckung des zweiten Bereichs 17 des ersten Gehäuseteils 2 sind vorzugsweise gleich groß, so dass beim Einsetzen zur Vormontage des Ventils 1 das zweite Gehäuseteil 3 automatisch durch den ersten und den zweiten konischen Bereich 37, 38 zentriert wird.

Ein weiteres Beispiel für eine Pressverbindung ist in der Fig. 5 dargestellt. Im Unterschied zu dem Ausführungsbeispiel der Fig. 4 ist an dem zweiten Gehäuseteil 3 lediglich ein erster Bereich 35 ausgebildet, der eine erste Presspassung mit dem korrespondierenden ersten Bereich 16 des ersten Gehäuseteils 2 bildet. An Stelle des zweiten Bereichs 36 des zweiten Gehäuseteils 3 ist dagegen ein konischer Abschnitt 39 an dem zweiten Gehäuseteil 3 ausgebildet. Dieser konische Abschnitt 39 wirkt erst bei Erreichen einer bestimmten Einpresstiefe mit dem zweiten Bereich 17 des ersten Gehäuseteils 2 zusammen. Wird das zweite Gehäuseteil 3 tiefer in das erste Gehäuseteil 2 eingepresst, so erfolgt eine Verformung des ersten Gehäuseteils 2 durch ein Aufweiten des zweiten Bereichs 17 des ersten Gehäuseteils 2 an seinem offenen Ende.

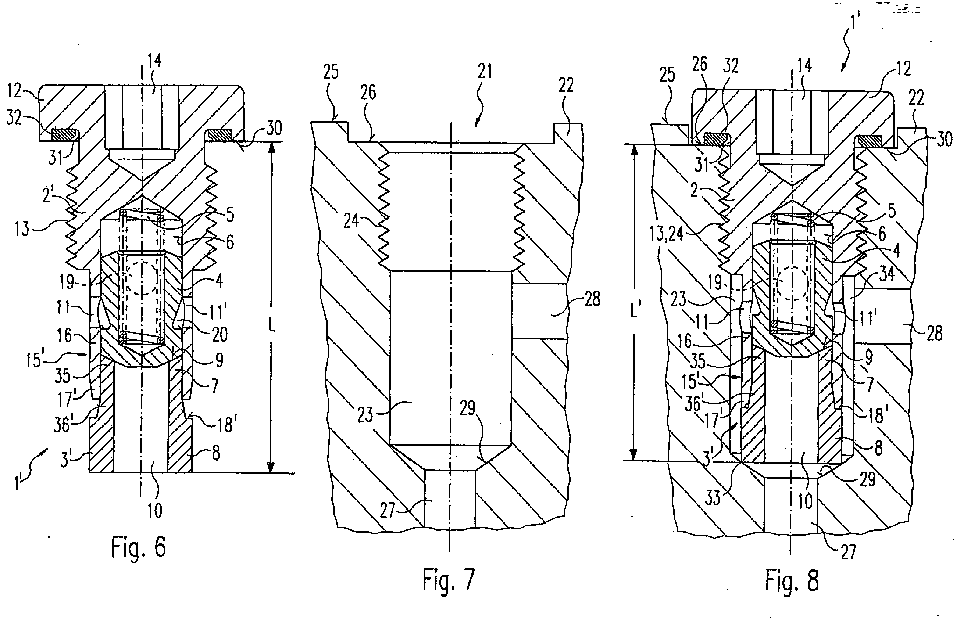

Die Fig. 6 zeigt ein zweites Ausführungsbeispiel für ein vormontiertes, erfindungsgemäßes Ventil 1'. Diejenigen Elemente der Fig. 6, die mit Elementen des ersten Ausführungsbeispiels der Fig. 1 übereinstimmen, sind mit identischen Bezugszeichen bezeichnet. Auf deren erneute Beschreibung wird verzichtet, um unnötige Wiederholungen zu vermeiden.

Der Unterschied des zweiten Ausführungsbeispiels der Fig. 6 zu dem ersten, in der Fig. 1 dargestellten und ausführlich beschriebenen Ausführungsbeispiel, liegt in der Verbindung zwischen dem ersten Gehäuseteil 2' und dem zweiten Gehäuseteil 3'. Um das zweite Gehäuseteil 3' mit dem ersten Gehäuseteil 2' zu verbinden, ist auch bei dem zweiten Ausführungsbeispiel an dem ersten Gehäuseteil 2' an dem hülsenförmigen Abschnitt 15' ein erster Bereich 16 ausgebildet, der mit einem entsprechenden ersten Bereich 35 des zweiten Gehäuseteils 3' zu einer Presspassung zusammenwirkt. In Richtung des offenen Endes des ersten Gehäuseteils 2' schließt sich an den ersten Bereich 16 des ersten Gehäuseteils 2' ein zweiter Bereich 17' an, dessen Innendurchmesser gegenüber dem Innendurchmesser des ersten Bereichs 16 des ersten Gehäuseteils 2' unverändert ist. Der äußere Umfang in dem zweiten Bereich 17' des ersten Gehäuseteils 2' verjüngt sich in Richtung des offenen Endes des ersten Gehäuseteils 2'.

Ausgehend von dem ersten Bereich 35 des zweiten Gehäuseteils 3' schließt sich ein zweiter Bereich 36' in Richtung des zweiten Endes 8 des zweiten Gehäuseteils 3' an, der sich radial erweitert. In axialer Richtung erstreckt sich diese vorzugsweise konische Erweiterung des zweiten Bereichs 36' des zweiten Gehäuseteils 3' bis zu der Markierung 18'. Die Markierung 18' ist im dargestellten Ausführungsbeispiel als eine radiale Stufe ausgebildet. Durch diese radiale Stufe wird nicht nur optisch die maximale Einpresstiefe angezeigt, sondern gleichzeitig eine Anschlagfläche für das offene Ende des ersten Gehäuseteils 2' ausgebildet, so dass die maximale Einpresstiefe durch die Markierung 18' begrenzt ist.

Vorzugsweise ist die radiale Stufe so ausgebildet, dass der Außendurchmesser des im Bereich des zweiten Endes 8 zylindrischen zweiten Gehäuseteils 3' mit dem Außendurchmesser des hülsenförmigen Abschnitts 15' des ersten Gehäuseteils 2' in dem ersten Bereich 16 übereinstimmt. Zur Vormontage wird das zweite Gehäuseteil 3' mit seinem ersten Bereich 35 in das offene Ende eingeführt, bis die konische Erweiterung in dem zweiten Bereich 36' des zweiten Gehäuseteils 3' in Anlage mit dem offenen Ende des ersten Gehäuseteils 2' ist.

Die Anordnung des konischen Bereichs kann selbstverständlich auch in den übrigen Bereichen des ersten oder zweiten Gehäuseteils 2', 3' vorgesehen sein. Entscheidend dabei ist lediglich, dass beim Einpressen der korrespondierende Bereich des jeweils anderen Gehäuseteils eine plastische Verformung erfährt.

Zur Aufnahme des so vormontierten Ventils 1' ist erneut eine Aufnahmeausnehmung 21 vorgesehen, die in der Fig. 7 noch einmal dargestellt ist und die in ihrer Gestaltung mit der bereits in Fig. 2 beschriebenen Aufnahmeausnehmung 21 übereinstimmt.

Im Gegensatz zu dem ersten Ausführungsbeispiel wird nun beim Einsetzen des vormontierten Ventils 1' in die Aufnahmeausnehmung 21 der zweite Bereich 17' des ersten Gehäuseteils 2' beim Einpressen des zweiten Gehäuseteils 3' in die zentrale Ausnehmung 6 des ersten Gehäuseteils 2' plastisch verformt. Die konische Verjüngung des ersten Gehäuseteils 2' in dem zweiten Bereich 17' korrespondiert vorzugsweise mit der konischen Erweiterung des zweiten Bereichs 36' des zweiten Gehäuseteils 3'. Damit ergibt sich beim Einpressen des zweiten Gehäuseteils 3' in das erste Gehäuseteil 2' bis zur Markierung 18' eine zylindrische Außenkontur, bestehend aus dem hülsenförmigen Abschnitt 15' des ersten Gehäuseteils 2' und dem zylindrischen zweiten Ende 8 des zweiten Gehäuseteils 3'.

Sofern sich das erste Gehäuseteil 2' mit seinem offenen Ende bereits in Anlage mit der als radiale Stufe ausgebildeten Markierung 18' befindet, bevor die Auflagefläche 30 des Schraubenkopfs 12 an dem Absatz 26 anliegt, wird durch ein weiteres Einschrauben des vormontierten Ventils 1' in die Aufnahmeausnehmung 21 einerseits die Flächenpressung an der Dichtkante 33 erhöht und andererseits eine plastische Verformung des hülsenförmigen Abschnitts 15' in seinem schwächsten Bereich erzeugt. Wie dies in der Fig. 8 dargestellt ist, verformen sich dabei die zwischen den Ablauföffnungen 11, 11'' ausgebildeten Stege nach außen.

Die gezielte plastische Verformung des hülsenförmigen Abschnitts 15' nach außen verhindert das Einklemmen des Schließkörpers 4 beim Stauchen des hülsenförmigen Abschnitts 15'. Der hülsenförmige Abschnitt 15', dessen zentrale Ausnehmung 6 zylindrisch ausgebildet ist, weist an seiner Außenseite im Bereich der Stege zwischen den Bohrungen 11, 11' bereits vor der Stauchung eine nach außen orientierte Vorwölbung auf. Die neutrale Faser der Stege ist damit bereits in unbelastetem Zustand nach außen vorgewölbt, weswegen im Belastungsfall die plastische Verformung ebenfalls in dieser Richtung erfolgt. Dabei ergibt sich die in Fig. 8 dargestellte Geometrie.

Gegenüber dem ersten Ausführungsbeispiel hat das zweite Ausführungsbeispiel den Vorteil, dass unabhängig von der Qualität der ersten Presspassung zwischen den ersten Bereichen 16 und 35 des ersten Gehäuseteils 2' und des zweiten Gehäuseteils 3' eine erhebliche axiale Kraft der Dichtkante 33 auf den Übergang 29 ausgeübt wird. Damit ist es möglich, die erforderliche Präzision bei der Herstellung der Bauteile weiter zu verringern. Die erforderliche Kraft in axialer Richtung, um die Flächenpressung an der Dichtkante 33 auf den Übergang 29 zu erzeugen, wird selbst bei nur geringerer Presskraft durch die Anlage des offenen Endes des ersten Gehäuseteils 2' an der radialen Stufe der Markierung 18' erzeugt.

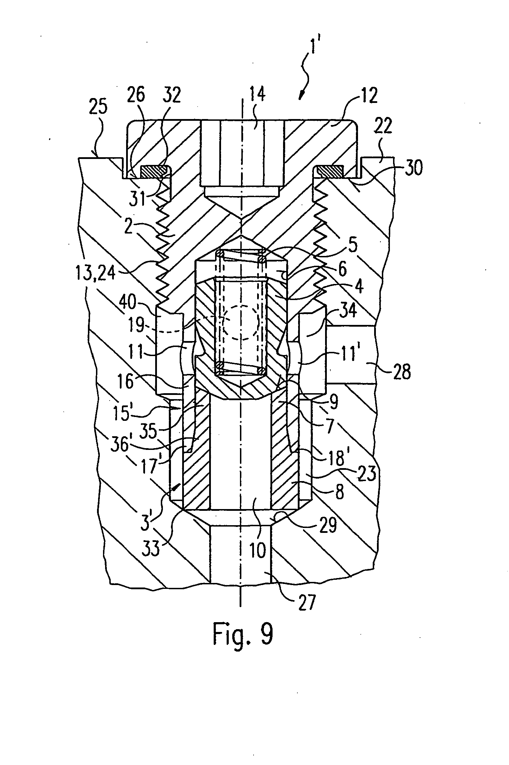

In der Fig. 9 ist das Ventil 1' in eine modifizierte Aufnahmeausnehmung eingesetzt. Dabei schließt sich an das Gewinde 24 ein Freistich 40 an, durch den das Volumen 34 vergrößert wird. Besonders vorteilhaft ist dabei der größere Abstand zwischen den Ablauföffnungen 11, 11' und der das Volumen 34 begrenzenden Wand des Ventilträgers 22 im Bereich des Freistichs 40. Dieser vergrößerte Abstand führt zu einer Reduzierung des Durchflusswiderstands. Eine besonders einfache Möglichkeit, den Freistich 40 in die Aufnahmeausnehmung 21' einzubringen, besteht darin, das Gewinde 24 in den Ventilträger 22 zu fräsen, so dass im Anschluss an das Einbringen des Gewindes 24 in einem Arbeitsgang der Freistich 40 erzeugt wird.

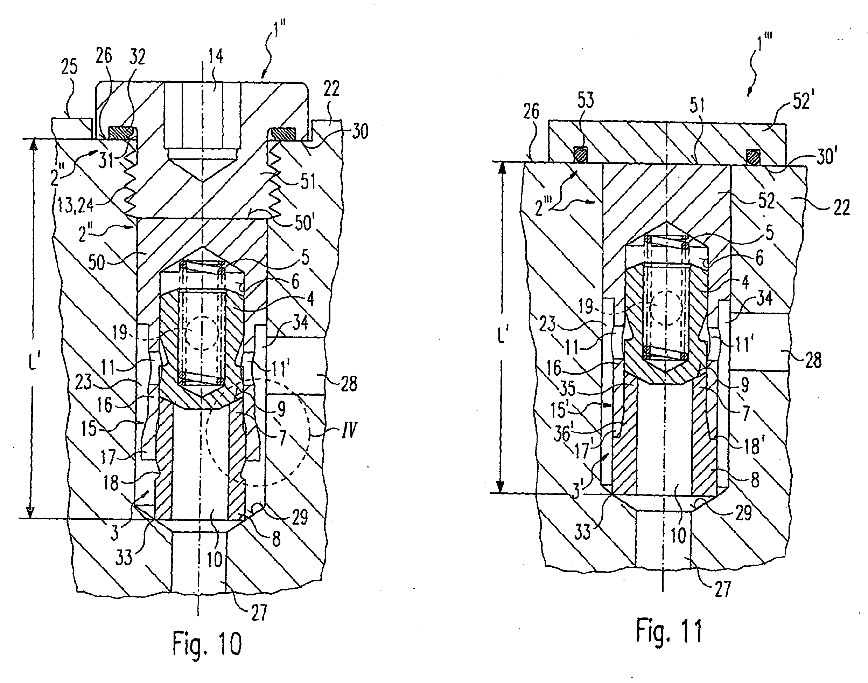

Die Fig. 10 zeigt ein drittes Ausführungsbeispiel des erfindungsgemäßen Ventils 1"'. Dabei besteht im Unterschied zu den ersten beiden Ausführungsbeispielen das erste Gehäuseteil 2" aus einem verkürzten ersten Teil 50, das vollständig innerhalb des Sacklochs 23 angeordnet ist und einer Verschlußschraube 50'. Die Fixierung des verkürzten ersten Teils 2" erfolgt über die Verschlußschraube 50', die an einer Stirnfläche 51 des verkürzten ersten Teils 2" anliegt.

Die übrigen Elemente stimmen mit denen des ersten Ausführungsbeispiels überein und sind mit denselben Bezugszeichen versehen.

Das vierte Ausführungsbeispiel eines erfindungsgemäßen Ventils 1"" basiert auf dem zweiten Ausführungsbeispiel. Das erste Gehäuseteil 2''' ist erneut zweiteilig ausgeführt und weist an seinem verkürzten ersten Teil 52 eine Stirnfläche 51 auf. Auf diese Stirnfläche 51 drückt mit einer Auflagefläche 30' eine das zweite Teil des ersten Gehäuseteils 2" bildende Verschlußplatte 52', die an der Oberfläche 26' des Ventilträgers 22 fixiert ist.

Die Fixierung der Verschlußplatte 52' ist in der Fig. 11 nicht dargestellt und kann beispielsweise durch Verschrauben, Vernieten oder einen Spannbügel erfolgen. Die Länge des ersten Teils 52 ist vorzugsweise so bemessen, dass die Verschlußplatte 52' als ebene Platte ausgebildet sein kann. In montiertem Zustand schließt dann die Stirnfläche 51 bündig mit der Oberfläche 26 des Ventilträgers 22 ab.

Zum Abdichten ist in der Verschlußplatte 52' eine Nut vorgesehen, in der ein O-Ring 53 angeordnet ist, der dichtend mit der Oberfläche 26 des Ventilträgers 22 zusammenwirkt

Die mit den Bauteilen des zweiten Ausführungsbeispiels übereinstimmenden Elemente sind mit identischen Bezugszeichen versehen und es wird auf eine erneute Beschreibung verzichtet.

Die Erfindung ist nicht auf die dargestellten Ausführungsbeispiele beschränkt, sondern umfasst auch die Kombination der Merkmale verschiedener Beispiele.

## Patentansprüche

1. Ventil, das in eine Aufnahmeausnehmung (21) eines Ventilträgers (22) einsetzbar ist, wobei das Ventil (1, 1', 1", 1"') ein erstes Gehäuseteil (2, 2', 2", 2"') und einen Schließkörper (4) umfaßt, der mit einer Dichtfläche (9) zu einem Dichtsitz zusammenwirkt, wobei das Ventil (1, 1', 1", 1"') mittels des ersten Gehäuseteils (2, 2', 2" , 2"') in der Aufnahmeausnehmung (21) des Ventilträgers (22) fixierbar ist und das erste Gehäuseteil (2, 2', 2", 2'") eine Auflagefläche (30, 30') aufweist, die bei eingesetztem Ventil (1, 1') dessen axiale Position bezüglich des Ventilträgers (22) bestimmt und wobei ein zweites Gehäuseteil (3, 3') mit einem ersten Ende (7) mit dem ersten Gehäuseteil (2, 2', 2", 2"') über eine Pressverbindung verbindbar ist und die mit dem Schließkörper (4) zusammenwirkende Dichtfläche (9) an dem zweiten Gehäuseteil (3, 3') ausgebildet ist,
**dadurch gekennzeichnet,**
**dass** in dem Bereich der Auflagefläche (30, 30') ein in axialer Richtung dichtendes Dichtelement (32, 53) vorgesehen ist und
**dass** eine Baulänge (L) des Ventils (1, 1', 1", 1"') zwischen einem zweiten Ende (8) des zweiten Gehäuseteils (3, 3') und der Auflagefläche (30, 30') des ersten Gehäuseteils (2, 2', 2", 2''') durch eine Einpresstiefe des ersten Endes (7) des zweiten Gehäuseteils (3 3') in das erste Gehäuseteil (2, 2', 2", 2"') oder des ersten Gehäuseteils (2, 2', 2", 2"') in das erste Ende (7) des zweiten Gehäuseteils (3, 3') bestimmbar ist, wobei die Einpresstiefe durch Abstützen des zweiten Endes (8) des zweiten Gehäuseteils (3, 3') in der Aufnahmeausnehmung (21) beim Einsetzen des Ventils (1, 1' , 1", 1"') erhöht sein kann und dass an dem zweiten Ende (8) des zweiten Gehäuseteils (3, 3') eine Dichtkante (33) ausgebildet ist.

2. Ventil nach Anspruch 1,
**dadurch gekennzeichnet,**
**dass** an dem ersten Gehäuseteil (2, 2', 2" , 2"') ein erster Bereich (16) ausgebildet ist, der mit einem ersten Bereich (35) des zweiten Gehäuseteils (3, 3') eine erste Presspassung ausbildet.

3. Ventil nach Anspruch 2,
**dadurch gekennzeichnet,**
**dass** an dem ersten Gehäuseteil (2, 2', 2", 2''') ein zweiter Bereich (17) ausgebildet ist, der mit einem zweiten Bereich (36) des zweiten Gehäuseteils (3, 3') eine zweite Presspassung ausbildet, die im Verhältnis zu der ersten Presspassung eine unterschiedliche radiale Ausdehnung aufweist.

4. Ventil nach Anspruch 3,
**dadurch gekennzeichnet,**
**dass** jeweils zwischen dem ersten Bereich (16) und dem zweiten Bereich (17) des ersten Gehäuseteils (2, 2") ein erster konischer Übergang (37) und zwischen dem ersten Bereich (35) und dem zweiten Bereich (36) des zweiten Gehäuseteils (3) ein zweiter konischer Übergang (38) ausgebildet ist.

5. Ventil nach Anspruch 3,
**dadurch gekennzeichnet,**
**dass** zum Erhöhen der Presskraft mit zunehmender Einpresstiefe zumindest einer der Bereiche (16, 17, 35, 36) des ersten Gehäuseteils (2, 2', 2" , 2"') und/oder des zweiten Gehäuseteils (3, 3') konisch geformt ist.

6. Ventil nach einem der Ansprüche 3 bis 5,
**dadurch gekennzeichnet,**
**dass** die axiale Erstreckung des ersten Bereichs (35) des zweiten Gehäuseteils (3, 3') und die axiale Erstreckung des zweiten Bereichs (17, 17') des ersten Gehäuseteils (2, 2', 2'', 2''') gleich groß ist.

7. Ventil nach einem der Ansprüche 1 bis 6,
**dadurch gekennzeichnet,**
**dass** zum Kontrollieren der Einpresstiefe eine Markierung (18, 18') an dem ersten Gehäuseteil (2, 2', 2", 2''') oder an dem zweiten Gehäuseteil (3, 3') angeordnet ist.

8. Ventil nach einem der Ansprüche 1 bis 6,
**dadurch gekennzeichnet,**
**dass** zum Begrenzen der Einpresstiefe an dem ersten oder dem zweiten Gehäuseteil eine Anschlagfläche (18') ausgebildet ist.

9. Ventil nach Anspruch 8,
**dadurch gekennzeichnet,**
**dass** an dem ersten Gehäuseteil (2', 2"') ein bei einer die maximale Einpresstiefe überschreitenden Verkürzung der Baulänge (L) plastisch verformbarer Bereich ausgebildet ist.

10. Ventil nach Anspruch 9,
**dadurch gekennzeichnet,**
**dass** der plastisch verformbare Bereich eine radial nach außen gerichtete Vorwölbung an dem ersten Gehäuseteil (2', 2"') aufweist.

11. Ventil nach einem der Ansprüche 1 bis 10,
**dadurch gekennzeichnet,**
**dass** das zweite Gehäuseteil (3, 3') eine das zweite Gehäuseteil (3, 3') axial durchdringende Zulauföffnung (10) aufweist.

12. Ventil nach einem der Ansprüche 1 bis 11,
**dadurch gekennzeichnet,**
**dass** das erste Gehäuseteil (2, 2', 2", 2"') zur Aufnahme des Schließkörpers (4) und des ersten Endes (7) des zweiten Gehäuseteils (3, 3') eine zentrale Ausnehmung (6) aufweist.

13. Ventil nach Anspruch 12,
**dadurch gekennzeichnet,**
**dass** in das erste Gehäuseteil (2, 2', 2", 2"') in dem Bereich der zentralen Ausnehmung (6) zumindest eine radiale Ablauföffnung (11, 11') eingebracht ist.

14. Ventil nach Anspruch 13,
**dadurch gekennzeichnet,**
**dass** in dem Bereich der zentralen Ausnehmung (6) zumindest eine weitere radiale Öffnung (19) zu der zumindest einen Ablauföffnung (11, 11') axial in Richtung des geschlossenen Endes der zentralen Ausnehmung (6) versetzt angeordnet ist.

15. Ventil nach Anspruch 14,
**dadurch gekennzeichnet,**
**dass** der Schließkörper (4) topfförmig ausgebildet ist und an seinem äußeren Umfang eine umlaufende Nut (20) ausgebildet ist, deren axiale Lage und Ausdehnung so gewählt sind, dass sie sich mit der zumindest einen weiteren radialen Öffnung (19) zumindest teilweise überdeckt, wenn der Schließkörper (4) bei montiertem Ventil (1, 1', 1, " , 1"') dichtend mit der Dichtfläche (9) zusammenwirkt.

16. Ventil nach einem der Ansprüche 13 bis 15,
**dadurch gekennzeichnet,**
**dass** der Schließkörper (4) mit der zentralen Ausnehmung (6) des ersten Gehäuseteils (2, 2') eine die Dämpfung des Ventils (1, 1', 1", 1"') einstellende Spielpassung ausbildet und durch den die Spielpassung bildenden Spalt zwischen dem Schließkörper (4) und der zentralen Ausnehmung (6) bei einer Bewegung des Schließkörpers (6) aus einem rückwärtigen Volumen (6') verdrängtes Druckmittel ableitbar ist.

17. Ventil nach einem der Ansprüche 1 bis 16,
**dadurch gekennzeichnet,**
**dass** die Dichtfläche (9) an der Stirnseite des ersten Endes (7) des zweiten Gehäuseteils (3, 3') ausgebildet ist.

18. Ventil nach einem der Ansprüche 1 bis 17,
**dadurch gekennzeichnet,**
**dass** das erste Gehäuseteil (2, 2', 2", 2"') mittels einer Schraubverbindung (13, 24) in einem Ventilträger (22) fixierbar ist.

## Claims

1. Valve which can be inserted in a receiving recess (21) of a valve carrier (22), the valve (1, 1' , 1'', 1''') comprising a first housing portion (2, 2', 2'', 2''') and a closure member (4) which co-operates with a sealing face (9) to form a sealing seat, the valve (1, 1', 1'', 1''') being able to be fixed in the receiving recess (21) of the valve carrier (22) by means of the first housing portion (2, 2' , 2", 2"') and the first housing portion (2, 2', 2'', 2''') having a support face (30, 30') which, when the valve (1, 1') is inserted, determines the axial position thereof relative to the valve carrier (22), and a second housing portion (3, 3') being able to be connected by means of a first end (7) to the first housing portion (2, 2' 2" , 2"') by means of a compression connection and the sealing face (9) which co-operates with the closure member (4) being formed on the second housing portion (3, 3'),
**characterised in that**
a sealing element (32, 53) which seals in an axial direction is provided in the region of the support face (30, 30') and
**in that** a structural length (L) of the valve (1, 1', 1", 1''') can be determined between a second end (8) of the second housing portion (3, 3') and the support face (30, 30') of the first housing portion (2, 2', 2", 2"') by means of an indentation depth of the first end (7) of the second housing portion (3, 3') in the first housing portion (2, 2', 2", 2''') or the first housing portion (2, 2', 2", 2''') in the first end (7) of the second housing portion (3, 3'), the indentation depth being able to be increased by supporting the second end (8) of the second housing portion (3, 3') in the receiving recess (21) when the valve (1, 1', 1", 1"') is inserted, and **in that** a sealing edge (33) is formed on the second end (8) of the second housing portion (3, 3').

2. Valve according to claim 1,
**characterised in that**
there is formed on the first housing portion (2, 2', 2", 2"') a first region (16) which forms a first compression fit with a first region (35) of the second housing portion (3, 3').

3. Valve according to claim 2,
**characterised in that**
there is formed on the first housing portion (2, 2', 2" , 2"') a second region (17) which forms, with a second region (36) of the second housing portion (3, 3'), a second compression fit which has a different radial extent in relation to the first compression fit.

4. Valve according to claim 3,
**characterised in that**
a first conical transition (37) is formed in each case between the first region (16) and the second region (17) of the first housing portion (2, 2") and a second conical transition (38) is formed between the first region (35) and the second region (36) of the second housing portion (3).

5. Valve according to claim 3,
**characterised in that**
in order to increase the pressing force as the indentation depth increases, at least one of the regions (16, 17, 35, 36) of the first housing portion (2, 2', 2'', 2''') and/or the second housing portion (3, 3') is formed in a conical manner.

6. Valve according to any one of claims 3 to 5,
**characterised in that**
the axial extent of the first region (35) of the second housing portion (3, 3') and the axial extent of the second region (17, 17') of the first housing portion (2, 2', 2'', 2''') is of the same size.

7. Valve according to any one of claims 1 to 6,
**characterised in that**
in order to control the indentation depth, a mark (18, 18') is arranged on the first housing portion (2, 2', 2", 2"') or on the second housing portion (3, 3').

8. Valve according to any one of claims 1 to 6,
**characterised in that**
in order to limit the indentation depth, a stop face (18') is formed on the first or the second housing portion.

9. Valve according to claim 8,
**characterised in that**
there is formed on the first housing portion (2', 2"') a region which is plastically deformable if the structural length (L) is shortened by an amount which exceeds the maximum indentation depth.

10. Valve according to claim 9,
**characterised in that**
the plastically deformable region has a protrusion which is directed radially outwardly on the first housing portion (2', 2"') .

11. Valve according to any one of claims 1 to 10,
**characterised in that**
the second housing portion (3, 3') has a supply opening (10) which extends axially through the second housing portion (3, 3').

12. Valve according to any one of claims 1 to 11,
**characterised in that**
the first housing portion (2, 2', 2", 2"') has a central recess (6) for receiving the closure member (4) and the first end (7) of the second housing portion (3, 3').

13. Valve according to claim 12,
**characterised in that**
at least one radial discharge opening (11, 11') is formed in the first housing portion (2, 2', 2'', 2''') in the region of the central recess (6).

14. Valve according to claim 13,
**characterised in that**
in the region of the central recess (6), at least one additional radial opening (19) is arranged so as to be axially offset in the direction of the closed end of the central recess (6) relative to the at least one discharge opening (11, 11').

15. Valve according to claim 14,
**characterised in that**
the closure member (4) is constructed in a pot-like manner and there is formed, on the outer periphery thereof, a peripheral groove (20) whose axial position and extent are selected so that it at least partially overlaps the at least one additional radial opening (19) when the closure member (4) co-operates in a sealing manner with the sealing face (9) when the valve (1, 1', 1", 1'") is mounted.

16. Valve according to any one of claims 13 to 15,
**characterised in that**
the closure member (4) forms a clearance fit which adjusts the damping of the valve (1, 1', 1", 1"') with the central recess (6) of the first housing portion (2, 2') and, through the gap which forms the clearance fit between the closure member (4) and the central recess (6), it is possible to direct pressure medium which is forced from a rear space (6') when the closure member (6) is moved.

17. Valve according to any one of claims 1 to 16,
**characterised in that**
the sealing face (9) is formed on the end face of the first end (7) of the second housing portion (3, 3').

18. Valve according to any one of claims 1 to 17,
**characterised in that**
the first housing portion (2, 2', 2", 2''') can be fixed in a valve carrier (22) by means of a screw connection (13, 24).

## Revendications

1. Soupape qui peut être mise en place dans un évidement de réception (21) d'un porte-soupape (22), ladite soupape (1, 1', 1", 1''') comprenant une première partie de boîtier (2, 2', 2", 2"') et un corps d'obturation (4) qui coopère avec une surface d'étanchéité (9) avec un siège d'étanchéité, la soupape (1, 1', 1", 1"') pouvant être fixée au moyen de la première partie de boîtier (2, 2', 2", 2"') dans l'évidement de réception (21) du porte-soupape (22) et la première partie de boîtier (2, 2', 2", 2"') présente une surface d'appui (30, 30') qui, lorsque la soupape est mise en place (1, 1'), détermine sa position axiale par rapport au portes-soupape (22), et une seconde partie de boîtier (3, 3') est susceptible d'être reliée par une première extrémité (7) avec la première partie de boîtier (2, 2', 2", 2"') via une jonction à la presse, et la surface d'étanchéité (9) qui coopère avec le corps d'obturation (4) est réalisée au niveau de la seconde partie de boîtier (3, 3'),
**caractérisée en ce que**
dans la région de la surface d'appui (30, 30') il est prévu un élément d'étanchéité (32, 53) qui étanche en direction axiale, et
une longueur structurelle (L) de la soupape (1, 1', 1", 1"') entre une seconde extrémité (8) de la seconde partie de boîtier (3, 3') et la surface d'appui (30, 30') de la première partie de boîtier (2, 2', 2", 2"') est déterminable au moyen d'une profondeur d'enfoncement à la presse de la première extrémité (7) de la seconde partie de boîtier (3, 3') dans la première partie de boîtier (2, 2', 2", 2"') ou de la première partie de boîtier (2, 2', 2", 2"') dans la première extrémité (7) de la seconde partie de boîtier (3, 3'), la profondeur d'enfoncement à la presse pouvant être augmentée en soutenant la seconde extrémité (8) de la seconde partie de boîtier (3, 3') dans l'évidement de réception (21) lors de la mise en place de la soupape (1, 1', 1", 1"'), et
une arête d'étanchéité (33) est réalisée à la seconde extrémité (8) de la seconde partie de boîtier (3, 3').

2. Soupape selon la revendication 1,
**caractérisée en ce que** sur la première partie de boîtier (2, 2', 2", 2"') est réalisée une première zone (16) qui réalise avec une première zone (35) de la seconde partie de boîtier (3, 3') un premier ajustement à la presse.

3. Soupape selon la revendication 2,
**caractérisée en ce que** sur la première partie de boîtier (2, 2', 2", 2"') est réalisée une seconde zone (17) qui réalise avec une seconde zone (36) de la seconde partie de boîtier (3, 3') un second ajustement à la presse, qui présente en relation au premier ajustement à la presse une extension radiale différente.

4. Soupape selon la revendication 3,
**caractérisée en ce qu'**une première transition conique (37) est réalisée respectivement entre la première zone (16) et la seconde zone (17) de la première partie de boîtier (2, 2"), et une seconde transition conique (38) est réalisée entre la première zone (35) et la seconde zone (36) de la seconde partie de boîtier (3).

5. Soupape selon la revendication 3,
**caractérisée en ce que** pour augmenter la force de pressage lorsque la profondeur d'enfoncement à la presse augmente, l'une des zones au moins (16, 17, 35, 36) de la première partie de boîtier (2, 2', 2", 2"') et/ou de la seconde partie de boîtier (3, 3') est formée conique.

6. Soupape selon l'une des revendications 3 à 5,
**caractérisée en ce que** l'extension axiale de la première zone (35) de la seconde partie de boîtier (3, 3') et l'extension axiale de la seconde zone (17, 17') de la première partie de boîtier (2, 2', 2", 2"') sont égales.

7. Soupape selon l'une des revendications 1 à 6,
**caractérisée en ce que** pour contrôler la profondeur d'enfoncement à la presse, un marquage (18, 18') est apposé sur la première partie de boîtier (2, 2', 2", 2"') ou sur la seconde partie de boîtier (3, 3').

8. Soupape selon l'une des revendications 1 à 6,
**caractérisée en ce que** pour limiter la profondeur d'enfoncement à la presse, une surface de butée (18') est réalisée sur la première ou sur la seconde partie de boîtier.

9. Soupape selon la revendication 8,
**caractérisée en ce que** sur la première partie de boîtier (2', 2"') est réalisé une zone plastiquement déformable lors d'un raccourcissement de la longueur structurelle (L) qui excède la profondeur d'enfoncement à la presse maximum.

10. Soupape selon la revendication 9,
**caractérisée en ce que** la zone plastiquement déformable comprend un bombement préliminaire, dirigé radialement vers l'extérieur, sur la première partie de boîtier (2', 2"').

11. Soupape selon l'une des revendications 1 à 10,
**caractérisée en ce que** la seconde partie de boîtier (3, 3') comporte une ouverture d'admission (10) qui traverse axialement la seconde partie de boîtier (3, 3').

12. Soupape selon l'une des revendications 1 à 11,
**caractérisée en ce que** la première partie de boîtier (2, 2', 2", 2"') comporte un évidement central (6) pour recevoir le corps d'obturation (4) et la première extrémité (7) de la seconde partie de boîtier (3, 3').

13. Soupape selon la revendication 12,
**caractérisée en ce que** dans la première partie de boîtier (2, 2', 2", 2"') est ménagée au moins une ouverture d'évacuation radiale (11, 11') dans la zone de l'évidement central (6).

14. Soupape selon la revendication 13,
**caractérisée en ce que**, dans la zone de l'évidement central (6) est ménagée au moins une autre ouverture radiale (19) agencée en décalage axial en direction de l'extrémité fermée de l'évidement central (6) par rapport à ladite au moins une ouverture d'évacuation (11, 11').

15. Soupape selon la revendication 14,
**caractérisée en ce que** le corps d'obturation (4) est réalisé en forme de godet et à sa périphérie extérieure est ménagée une gorge périphérique (20), dont la position axiale et l'extension sont choisies de telle manière qu'elle recouvre au moins partiellement ladite au moins une autre ouverture radiale (19) lorsque le corps d'obturation (4) coopère de façon étanche avec la surface d'étanchéité (9) lorsque la soupape (1, 1', 1", 1"') est montée.

16. Soupape selon l'une des revendications 13 à 15,
**caractérisée en ce que** le corps d'obturation (4) forme, avec l'évidement central (6) de la première partie de boîtier (2, 2'), un ajustement avec jeu qui règle l'amortissement de la soupape (1, 1', 1", 1"'), et le fluide sous pression refoulé hors d'un volume postérieur (6') lors d'un mouvement du corps d'obturation (6) est susceptible d'être dérivé à travers la fente, réalisant l'ajustement avec jeu, entre le corps d'obturation (4) et l'évidement central (6).

17. Soupape selon l'une des revendications 1 à 16,
**caractérisée en ce que** la surface d'étanchéité (9) est réalisée au niveau de la face frontale de la première extrémité (7) de la seconde partie de boîtier (3, 3').

18. Soupape selon l'une des revendications 1 à 17,
**caractérisée en ce que** la première partie de boîtier (2, 2', 2", 2"') est susceptible d'être fixée dans un porte-soupape (22) au moyen d'une liaison vissée (13, 24).
